# EUROPEAN PATENT APPLICATION

(11) **EP 4 763 607 A1**
(43) Date of publication of application: **24.06.2026**
(21) Application number: 25226442.9
(22) Date of filing: 22.12.2025
(51) Int. Cl.: B60N 2/75

(54) **ANGLE-ADJUSTABLE CENTRAL ARMREST**

(30) Priority: 23.12.2024 CN 202411898233; 23.12.2024 CN 202423197126 U
(71) Applicant: Adient (Chongqing) Automotive Components Co., Ltd., Liangjiang New Area, Chongqing 401122 (CN)
(72) Inventor: CHEN, Gongming, Chongqing, Liangjiang New Area, 401122 (CN); DENG, Xinyuan, Chongqing, Liangjiang New Area, 401122 (CN); XIN, Yi, Chongqing, Liangjiang New Area, 401122 (CN); LI, Qingmao, Chongqing, Liangjiang New Area, 401122 (CN); LI, Yajun, Liangjiang New Area, Chongqing, 401122 (CN)
(74) Representative: Liedtke & Partner Patentanwälte

(57) **Abstract**

The present invention discloses an angle-adjustable central armrest, comprising an armrest framework (8), a rear part of the armrest framework (8) being rotatably mounted between a left support (9) and a right support (10) by means of a rotary shaft (1), a left end of the rotary shaft (1) passing through the left support (9), an angle adjustment mechanism being mounted at the left end of the rotary shaft (1) that has passed through and out, and the angle adjustment mechanism being mounted on an outer side of the left support (9). By providing the angle adjustment mechanism, an angle of the central armrest may be adjusted according to how a backrest is tilted, thus improving passenger comfort.

## Description

### Technical field

The present invention relates to the technical field of automobile seat armrests, and in particular to an angle-adjustable central armrest.

### Background art

With the development of the automotive industry, requirements for comfort in the operation and use of automobiles are ever higher; an automobile central armrest is used as an interior decorative structural member on an automobile seat for supporting the arm of a passenger, and is an important component for improving the riding comfort of the passenger. A well-designed seat armrest is able to improve the comfort and safety of the automobile seat and the vehicle.

At present, a passenger can adjust a seat backrest according to riding comfort, whereas an armrest beside the seat can be only in either an opened state or a closed state; backrow central armrests of existing automobile seat products at present are all armrests without geared adjustment, and armrests without geared angle-adjustment are not able to maintain a comfortable position when the backrest is tilted. Therefore, it is necessary to design a central armrest with an adaptive angle adjustment capability for when the backrest is tilted.

### Summary of the invention

In order to solve the above technical problem, the present invention provides an angle-adjustable central armrest with geared adjustment.

The technical solution thereof is as follows: an angle-adjustable central armrest, comprising an armrest framework, a rear part of the armrest framework being rotatably mounted between a left support and a right support by means of a rotary shaft, and key features thereof being: a left end of the rotary shaft passing through the left support, an angle adjustment mechanism being mounted at the left end of the rotary shaft that has passed through and out, and the angle adjustment mechanism being mounted on an outer side of the left support. By providing the angle adjustment mechanism, an angle of the central armrest may be adjusted according to how a backrest is tilted, thus improving passenger comfort.

Preferably: the angle adjustment mechanism comprises a guide piece, a ratchet wheel and a pawl, the guide piece being actively fitted around the rotary shaft, an arcuate guide slot being provided on the guide piece, the ratchet wheel being fixedly fitted around the rotary shaft, the ratchet wheel being located at an outer side of the guide piece, multiple gear ratchet teeth being distributed on a side wall of the ratchet wheel, an end face of the ratchet wheel that is near the guide piece having a drive rod, and an outer end of the drive rod extending into the arcuate guide slot; The pawl is mounted on the left support via an intermediate shaft, the pawl being located on one side of the ratchet wheel, a torsion spring being fitted around the intermediate shaft that is between the left support and the pawl, one end of the torsion spring being mounted on the left support, the other end abutting a side wall of the pawl that is remote from the ratchet wheel, a limiting pawl being provided on a side wall of the pawl that is near the ratchet wheel, the limiting pawl being able to engage with the gear ratchet teeth, realizing gear adjustment; An unlocking rod is provided on an end face of the pawl that is near the left support, and an unlocking protrusion is provided on a side wall of the guide piece, the unlocking rod abutting a side wall of the unlocking protrusion.

Preferably: a limiting protrusion is provided on a side wall of the ratchet wheel, and the drive rod drives the guide piece to rotate when forward rotation of the ratchet wheel causes the limiting protrusion to contact a side wall of the pawl, the unlocking protrusion pushing the unlocking rod to lift the pawl, and the unlocking rod abutting a lower side wall of the unlocking protrusion, opening the central armrest, at which time the gear ratchet teeth engage with the limiting pawl at the lowest position on the side wall of the ratchet wheel;
the ratchet wheel rotates backward, the pawl lifting such that the limiting pawl respectively engages with multiple gear ratchet teeth on the side wall of the ratchet wheel, the unlocking protrusion pushing the unlocking rod to lift the pawl when the drive rod contacts the side wall of the arcuate guide slot and drives the guide piece to rotate, and the unlocking rod abutting an upper side wall of the unlocking protrusion, closing the central armrest.

Preferably: a gear angle of the gear ratchet teeth adjacent to the ratchet wheel is 8°. Preferably: a limiting piece is provided on the right support, a right end of the rotary shaft being rotatably mounted on the limiting piece, an arcuate limiting slot being provided on the limiting piece, a limiting shaft being fixedly provided on the armrest framework near the right support, the limiting shaft extending into the arcuate limiting slot, and two ends of the arcuate limiting slot being able to restrict opening and closing adjustment of the armrest framework.

Preferably: a connecting piece is mounted on an outer side of the pawl and the ratchet wheel, the connecting piece being fixed to the rotary shaft and the intermediate shaft.

Preferably: a damping washer is mounted on the intermediate shaft of an outer side of the rotary shaft, and a stepped bolt is mounted on an outer side of the damping washer.

Compared with the prior art, the present invention has beneficial effects: 1. As a backrest changes angle, an angle of a central armrest being adjustable, which is more adaptive to comfort requirements; 2. Structurally simple, requiring less space; 3. Strong mechanism universality.

### Brief Description of the Drawings

- Figure 1: is a structural schematic drawing of a closed position of the present invention,
- Figure 2: is a structural schematic drawing of an angle adjustment mechanism in Fig. 1,
- Figure 3: is an exploded view of Fig. 2,
- Figure 4: is a structural schematic drawing of the present invention opened to the lowest position,
- Figure 5: is a structural schematic drawing of a ratchet wheel 2 and a pawl 4 of the present invention engaged in first gear,
- Figure 6: is a structural schematic drawing of a ratchet wheel 2 and a pawl 4 of the present invention engaged in second gear, and
- Figure 7: is a structural schematic drawing of a ratchet wheel 2 and a pawl 4 of the present invention engaged in third gear.

### Detailed Description of Embodiments

The present invention is explained further below with reference to the embodiments and accompanying drawings.

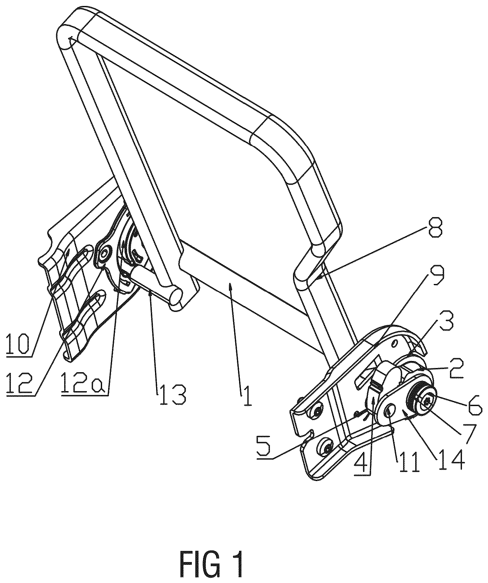

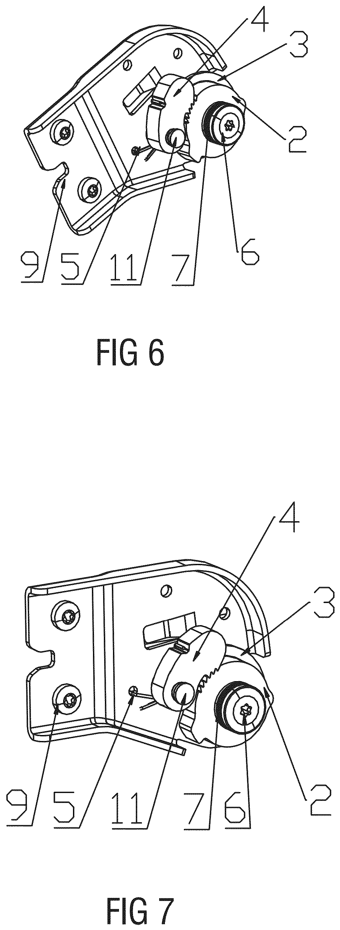

As shown in Figs. 1 to 7, an angle-adjustable central armrest is composed of components such as an armrest framework 8, a left support 9 and a right support 10, wherein the structure of the armrest framework 8 is prior art and is not superfluously detailed here; a rear part of the armrest framework 8 is rotatably mounted between the left support 9 and the right support 10 via a rotary shaft 1, a left end of the rotary shaft 1 passing through the left support 9, and an angle adjustment mechanism is mounted at the left end of the rotary shaft 1 that has passed through and out, the angle adjustment mechanism being mounted on an outer side of the left support 9.

In view of Figs. 1, 2 and 3, it can be seen that: the angle adjustment mechanism comprises a guide piece 3, a ratchet wheel 2 and a pawl 4, the guide piece 3 being actively fitted around the rotary shaft 1, an arcuate guide slot 3a being provided on the guide piece 3, the ratchet wheel 2 being fixedly fitted around the rotary shaft 1, the ratchet wheel 2 being located at an outer side of the guide piece 3, multiple gear ratchet teeth 2a being distributed on a side wall of the ratchet wheel 2, an end face of the ratchet wheel 2 that is near the guide piece 3 having a drive rod 2b, and an outer end of the drive rod 2b extending into the arcuate guide slot 3a; the pawl 4 is mounted on the left support 9 via an intermediate shaft 11, the pawl 4 being located on one side of the ratchet wheel 2, a torsion spring 5 being fitted around the intermediate shaft 11 that is between the left support 9 and the pawl 4, one end of the torsion spring 5 being mounted on the left support 9, i.e. a mounting hole being provided on the left support 9, and one end of the torsion spring 5 passing into the mounting hole, the other end abutting a side wall of the pawl 4 that is remote from the ratchet wheel 2, specifically a mounting slot being provided on the side wall of the ratchet wheel 2 that is remote from the pawl 4, and an end part of the torsion spring 5 being clamped in the mounting slot, preventing slippage, realizing reliable mounting, a limiting pawl 4a being provided on a side wall of the pawl 4 that is near the ratchet wheel 2, the limiting pawl 4a being able to engage with the gear ratchet teeth 2a at different positions, realizing multiple gear adjustment; an unlocking rod 4b is provided on an end face of the pawl 4 that is near the left support 9, and an unlocking protrusion 3b is provided on a side wall of the guide piece 3, the unlocking rod 4b abutting a side wall of the unlocking protrusion 3b.

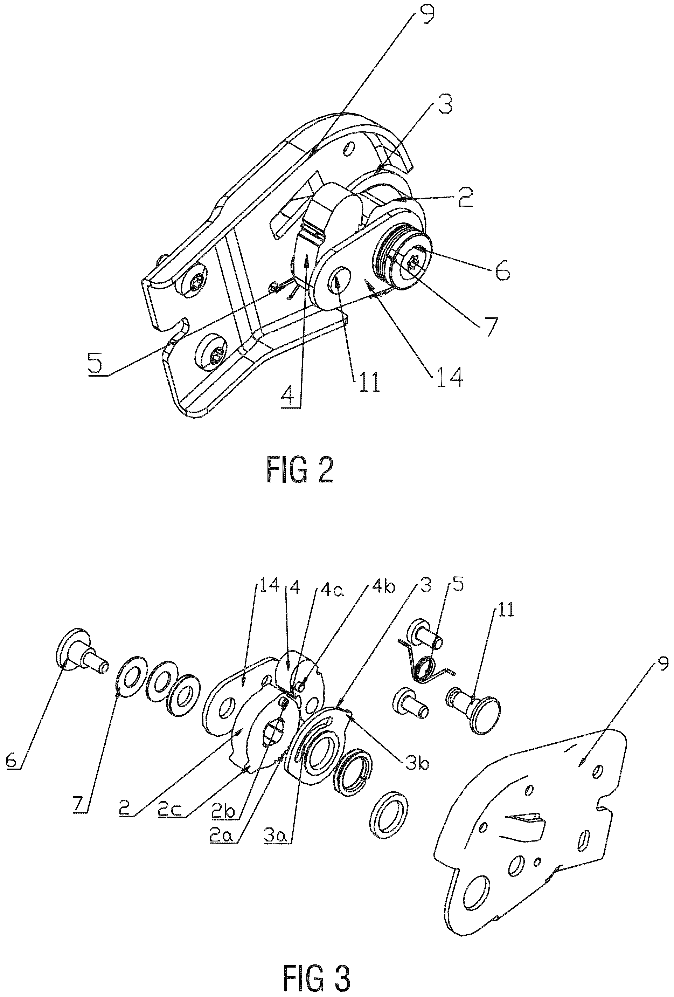

In view of Figs. 2 to 7, it can be seen that: a limiting protrusion 2c is provided on a side wall of the ratchet wheel 2, and the drive rod 2b drives the guide piece 3 to rotate when forward rotation of the ratchet wheel 2 causes the limiting protrusion 2c to contact a side wall of the pawl 4, the unlocking protrusion 3b pushing the unlocking rod 4b to lift the pawl 4, and the unlocking rod 4b abutting a lower side wall of the unlocking protrusion 3b, opening the central armrest, at which time the gear ratchet teeth 2a engage with the limiting pawl 4a at the lowest position on the side wall of the ratchet wheel 2; the ratchet wheel 2 rotates backward, the pawl 4 lifting such that the limiting pawl 4a respectively engages with multiple gear ratchet teeth 2a on the side wall of the ratchet wheel 2, the unlocking protrusion 3b pushing the unlocking rod 4b to lift the pawl 4 when the drive rod 2b contacts the side wall of the arcuate guide slot 3a and drives the guide piece 3 to rotate, and the unlocking rod 4b abutting an upper side wall of the unlocking protrusion 3b, closing the central armrest.

To more accurately adjust the position of the central armrest, a gear angle of the gear ratchet teeth 2a adjacent to the ratchet wheel 2 is 8°.

In Figs. 1 to 3: a connecting piece 14 is mounted on an outer side of the pawl 4 and the ratchet wheel 2, the connecting piece 14 being fixed to the rotary shaft 1 and the intermediate shaft 11; a damping washer 7 is mounted on the intermediate shaft 11 of an outer side of the rotary shaft 1, and a stepped bolt 6 is mounted on an outer side of the damping washer 7.

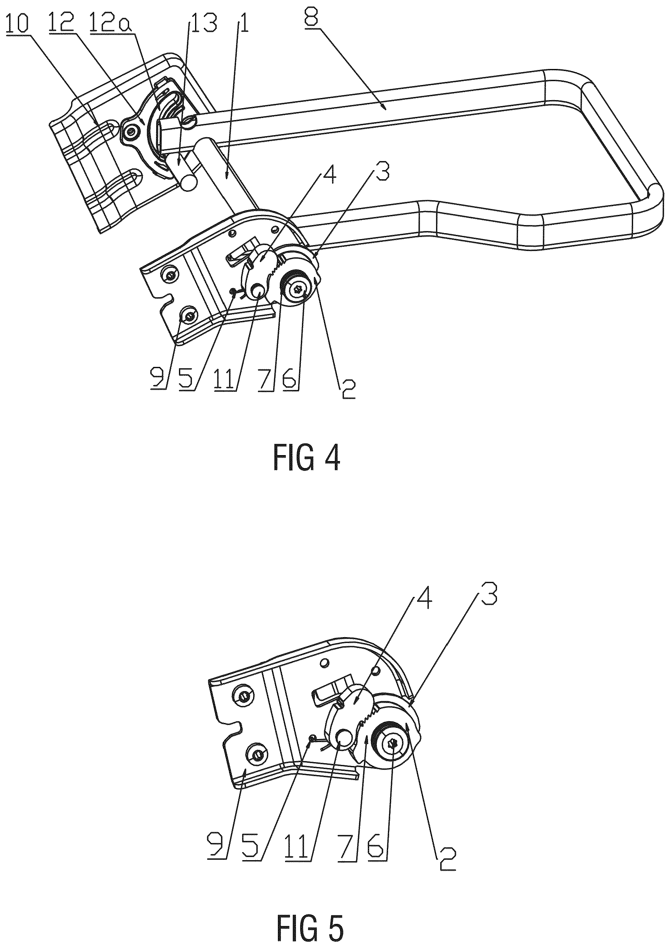

Referring to Figs. 1 and 4: a limiting piece 12 is provided on the right support 10, a right end of the rotary shaft 1 being rotatably mounted on the limiting piece 12, an arcuate limiting slot 12a being provided on the limiting piece 12, a limiting shaft 13 being fixedly provided on the armrest framework 8 near the right support 10, the limiting shaft 13 extending into the arcuate limiting slot 12a, and two ends of the arcuate limiting slot 12a being able to restrict opening and closing adjustment of the armrest framework 8.

A working process of the present invention is as follows:
1. Opening: when a central armrest is opened and rotates, a ratchet wheel 2 being connected to a rotary shaft 1 by a spline and rotating under the effect of the rotary shaft 1, the ratchet wheel 2 driving a guide piece 3 to rotate after rotating 93°, a pawl 4 starting to slide in a curve along a contour of the guide piece 3, and finally, under the effect of a torsion spring 5, the pawl 4 being locked to the ratchet wheel 2 at the lowest position of the central armrest;
2. During gear adjustment: the rotary shaft 1 driving the ratchet wheel 2 to rotate, the pawl 4 sliding along a contour of the ratchet wheel 2, realizing gear adjustment locking in first gear at 8° under the effect of a torsion spring 5 (3 gears being adjustable in the present embodiment, and an angle and a number of gears also being designable according to requirements), the guide piece 3 presently being pushed to rotate by the pawl 4, and during the rotation process, a stepped bolt 6 compressing a damping washer 7 to generate a damping force;
3. Closing: after the rotary shaft 1 has driven the ratchet wheel 2 to rotate by 95°, the guide piece 3 being driven to rotate by the ratchet wheel 2, the pawl 4 starting to slide in a curve along the contour of the guide piece 3, returning to a closed position after 25°, at which time one cycle ends; during the rotation process, the stepped bolt 6 compressing the damping washer 7 to generate a damping force.

Finally, it should be noted that the foregoing merely describes preferred embodiments of the present invention, and that those skilled in the art, under the teachings of the present invention, without departing from the purpose and claims thereof, may make various similar representations, and such transformations all fall within the scope of protection of the present invention.

### List of References

- 1: rotary shaft
- 2: ratchet wheel
- 2a: gear ratchet teeth
- 2b: drive rod
- 2c: limiting protrusion
- 3: guide piece
- 3a: arcuate guide slot
- 3b: unlocking protrusion
- 4: pawl
- 4a: limiting pawl
- 4b: unlocking rod
- 5: torsion spring
- 6: stepped bolt
- 7: damping washer
- 8: armrest framework
- 9: left support
- 10: right support
- 11: intermediate shaft
- 12: limiting piece
- 12a: arcuate limiting slot
- 13: limiting shaft
- 14: connecting piece

## Claims

1. An angle-adjustable central armrest, comprising:
- an armrest framework (8),
- a rear part of the armrest framework (8) being rotatably mounted between a left support (9) and
- a right support (10) by means of a rotary shaft (1),
wherein: a left end of the rotary shaft (1) passes through the left support (9), and an angle adjustment mechanism is mounted at the left end of the rotary shaft (1) that has passed through and out, the angle adjustment mechanism being mounted on an outer side of the left support (9).

2. The angle-adjustable central armrest as claimed in claim 1, wherein: the angle adjustment mechanism comprises a guide piece (3), a ratchet wheel (2) and a pawl (4), the guide piece (3) being actively fitted around the rotary shaft (1), an arcuate guide slot (3a) being provided on the guide piece (3), the ratchet wheel (2) being fixedly fitted around the rotary shaft (1), the ratchet wheel (2) being located at an outer side of the guide piece (3), multiple gear ratchet teeth (2a) being distributed on a side wall of the ratchet wheel (2), an end face of the ratchet wheel (2) that is near the guide piece (3) having a drive rod (2b), and an outer end of the drive rod (2b) extending into the arcuate guide slot (3a);
the pawl (4) is mounted on the left support (9) via an intermediate shaft (11), the pawl (4) being located on one side of the ratchet wheel (2), a torsion spring (5) being fitted around the intermediate shaft (11) that is between the left support (9) and the pawl (4), one end of the torsion spring (5) being mounted on the left support (9), the other end abutting a side wall of the pawl (4) that is remote from the ratchet wheel (2), a limiting pawl (4a) being provided on a side wall of the pawl (4) that is near the ratchet wheel (2), the limiting pawl (4a) being able to engage with the gear ratchet teeth (2a), realizing gear adjustment;
an unlocking rod (4b) is provided on an end face of the pawl (4) that is near the left support (9), and an unlocking protrusion (3b) is provided on a side wall of the guide piece (3), the unlocking rod (4b) abutting a side wall of the unlocking protrusion (3b).

3. The angle-adjustable central armrest as claimed in claim 1 or 2, wherein: a limiting protrusion (2c) is provided on a side wall of the ratchet wheel (2), and the drive rod (2b) drives the guide piece (3) to rotate when forward rotation of the ratchet wheel (2) causes the limiting protrusion (2c) to contact a side wall of the pawl (4), the unlocking protrusion (3b) pushing the unlocking rod (4b) to lift the pawl (4), and the unlocking rod (4b) abutting a lower side wall of the unlocking protrusion (3b), opening the central armrest, at which time the gear ratchet teeth (2a) engage with the limiting pawl (4a) at the lowest position on the side wall of the ratchet wheel (2);
the ratchet wheel (2) rotates backward, the pawl (4) lifting such that the limiting pawl (4a) respectively engages with multiple gear ratchet teeth (2a) on the side wall of the ratchet wheel (2), the unlocking protrusion (3b) pushing the unlocking rod (4b) to lift the pawl (4) when the drive rod (2b) contacts a side wall of the arcuate guide slot (3a) and drives the guide piece (3) to rotate, and the unlocking rod (4b) abutting an upper side wall of the unlocking protrusion (3b), closing the central armrest.

4. The angle-adjustable central armrest as claimed in claim 2 or 3, wherein: a gear angle of the gear ratchet teeth (2a) adjacent to the ratchet wheel (2) is 8°.

5. The angle-adjustable central armrest as claimed in anyone of the preceding claims, wherein: a limiting piece (12) is provided on the right support (10), a right end of the rotary shaft (1) being rotatably mounted on the limiting piece (12), an arcuate limiting slot (12a) being provided on the limiting piece (12), a limiting shaft (13) being fixedly provided on the armrest framework (8) near the right support (10), the limiting shaft (13) extending into the arcuate limiting slot (12a), and two ends of the arcuate limiting slot (12a) being able to restrict opening and closing adjustment of the armrest framework (8).

6. The angle-adjustable central armrest as claimed in anyone of the preceding claims 2 to 5, wherein: a connecting piece (14) is mounted on an outer side of the pawl (4) and the ratchet wheel (2), the connecting piece (14) being fixed to the rotary shaft (1) and the intermediate shaft (11).

7. The angle-adjustable central armrest as claimed in anyone of the preceding claims 2 to 6, wherein: a damping washer (7) is mounted on the intermediate shaft (11) of an outer side of the rotary shaft (1), and a stepped bolt (6) is mounted on an outer side of the damping washer (7).
